# EUROPEAN PATENT APPLICATION

(11) **EP 4 129 474 A1**
(43) Date of publication of application: **08.02.2023**
(21) Application number: 21781160.3
(22) Date of filing: 17.03.2021
(51) Int. Cl.: B01J 29/44, B01D 53/94, F01N 3/10, F01N 3/28

(54) **EXHAUST GAS PURIFICATION CATALYST DEVICE**

(30) Priority: 03.04.2020 JP 2020067904
(71) Applicant: CATALER CORPORATION, Kakegawa-shi, Shizuoka 437-1492 (JP)
(72) Inventor: TAKASAKI, Kohei, Kakegawa-shi, Shizuoka 437-1492 (JP); OHASHI, Tatsuya, Kakegawa-shi, Shizuoka 437-1492 (JP); OISHI, Shunsuke, Kakegawa-shi, Shizuoka 437-1492 (JP)
(74) Representative: Ricker, Mathias
(86) International application number: PCT/JP2021/010868
(87) International publication number: WO 2021/200167

(57) **Abstract**

An exhaust gas purification catalyst device comprising a base material and a catalyst coating layer provided on the base material, wherein the catalyst coating layer contains zeolite particles, inorganic oxide particles other than the zeolite particles, and a catalyst precious metal, and the ratio d_{ZEO}/d_{OX} between the average particle diameter D_{ZEO} of the zeolite particles and the average particle diameter dox of the inorganic oxide particles other than the zeolite particles is 3.4 or less.

## Description

### FIELD

The present invention relates to an exhaust gas purification catalytic device.

### BACKGROUND

Exhaust gas purification catalytic devices, in which a catalytic coating layer is formed, for example, on a honeycomb substrate made of cordierite, are used for purifying nitrogen oxides (NOx), hydrocarbons (HC), and carbon monoxide (CO) contained in exhaust gas emitted from automobile engines before releasing into the atmosphere.

Zeolites are known as a material used for catalytic coating layers of exhaust gas purification catalytic devices. Zeolites are expected to have functions of adsorbing NOx and HC, particularly NOx, at low temperatures, retaining both up to high temperatures, and releasing NOx at high temperatures.

Specifically, under low-temperature conditions, for example, immediately after starting an engine when the temperature of an exhaust gas is low, an exhaust gas purification catalyst is not easily activated, and catalytic purification of NOx does not easily occur, zeolites adsorb and retain NOx and reduce NOx concentration in the exhaust gas. When exhaust gas temperature rises and reaches high temperatures at which the exhaust gas purification catalyst can be activated, the NOx is released for catalytic purification.

Because of such functions, zeolites can enhance exhaust gas purification efficiency.

However, when a catalytic coating layer is composed of only zeolites, it is known that problems such as insufficient adhesion between a honeycomb substrate and the catalytic coating layer and insufficient uniformity in thickness of the catalytic coating layer may arise. Thus, an exhaust gas purification catalytic device in which a zeolite and an inorganic oxide other than zeolites are arranged in the catalytic coating layer has been proposed.

For example, PTL 1 discloses a catalyst for exhaust gas purification in which a carrier has an HC adsorbent material layer and a purification catalyst component layer laminated thereon in this order, wherein the HC adsorbent material layer contains a zeolite and a metal element-containing alumina.

### [CITATION LIST]

### [PATENT LITERATURE]

[PTL 1] Japanese Unexamined Patent Publication (Kokai) No. 2006-35130

### SUMMARY

### [TECHNICAL PROBLEM]

In exhaust gas purification catalytic devices of the prior art, even when a zeolite is contained in the catalytic coating layer, the functions of adsorbing, retaining, and releasing NOx and HC, particularly NOx, are not always sufficiently exhibited.

The present invention was completed in view of the above circumstances. Therefore, an object of the present invention is to provide an exhaust gas purification catalytic device comprising a catalytic coating layer in which zeolite particles and particles other than zeolite particles are contained, wherein the exhaust gas purification catalytic device is capable of efficiently adsorbing and releasing NOx and HC, particularly NOx, and adsorbs a large amount of NOx.

### [SOLUTION TO PROBLEM]

The present invention is as follows.
«Aspect 1» An exhaust gas purification catalytic device, comprising
   a substrate and a catalytic coating layer on the substrate, wherein
   the catalytic coating layer contains zeolite particles, inorganic oxide particles other than the zeolite particles, and a catalytic noble metal, and
   a ratio d_{ZEO}/d_{OX} of an average particle size d_{ZEO} of the zeolite particles to an average particle size d_{OX} of the inorganic oxide particles other than the zeolite particles is 3.4 or less.
«Aspect 2» The exhaust gas purification catalytic device according to Aspect 1, wherein the ratio d_{ZEO}/d_{OX} is 0.30 or greater.
«Aspect 3» The exhaust gas purification catalytic device according to Aspect 1 or 2, wherein the catalytic noble metal is supported by the zeolite particles.
«Aspect 4» The exhaust gas purification catalytic device according to any one of Aspects 1 to 3, wherein the catalytic noble metal is one selected from Pt and Pd or both thereof.
«Aspect 5» The exhaust gas purification catalytic device according to any one of Aspects 1 to 4, wherein the inorganic oxide particles other than the zeolite particles are particles comprising one or more selected from alumina, silica, titania, ceria, zirconia, and rare earth metal oxides other than ceria.
«Aspect 6» The exhaust gas purification catalytic device according to any one of Aspects 1 to 5, wherein a zeolite constituting the zeolite particles has an average pore diameter of 6.0 Å or less.
«Aspect 7» The exhaust gas purification catalytic device according to any one of Aspects 1 to 6, wherein a zeolite constituting the zeolite particles comprises one or more selected from MFI type, BEA type, MOR type, and FER type.
<<Aspect 8» The exhaust gas purification catalytic device according to any one of Aspects 1 to 7, wherein a zeolite constituting the zeolite particles has a silica-alumina ratio SAR of 25 or less.
«Aspect 9» The exhaust gas purification catalytic device according to any one of Aspects 1 to 8, wherein the particle size d_{ZEO} of the zeolite particles is 4 µm or more and 30 µm or less.
«Aspect 10» The exhaust gas purification catalytic device according to any one of Aspects 1 to 9, wherein a ratio M_{ZEO}/M_{OX} of a mass M_{ZEO} of the zeolite particles to a mass M_{OX} of the inorganic oxide particles other than the zeolite particles in the catalytic coating layer is 0.125 or more and 8.00 or less.
«Aspect 11» The exhaust gas purification catalytic device according to any one of Aspects 1 to 10 for use as a cold-start catalyst.

### [ADVANTAGEOUS EFFECTS OF INVENTION]

According to the present invention, an exhaust gas purification catalytic device that is capable of efficiently adsorbing and releasing NOx, even when NOx and HC are contained in an inflowing exhaust gas, and adsorbs a large amount of NOx and HC, particularly NOx, is provided.

### BRIEF DESCRIPTION OF DRAWINGS

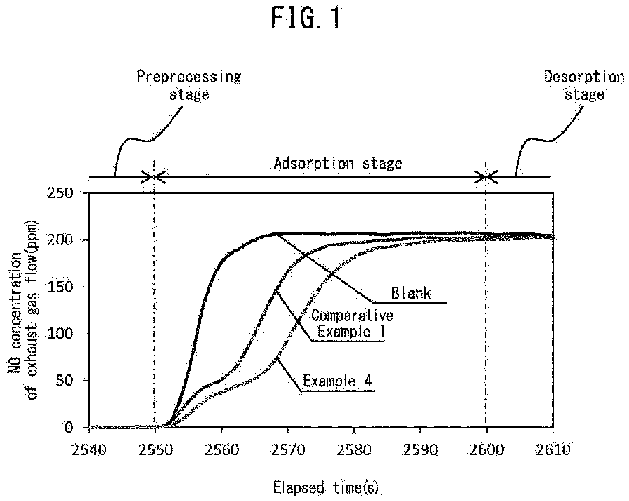

FIG. 1 is a graph showing changes in NO concentration in an exhaust gas over time at the adsorption stage for the samples of Example 4 and Comparative Example 1 and a blank sample.

### DESCRIPTION OF EMBODIMENTS

### «Exhaust gas purification catalytic device»

The exhaust gas purification catalytic device of the present invention is
an exhaust gas purification catalytic device comprising a substrate and a catalytic coating layer on the substrate, wherein
the catalytic coating layer contains zeolite particles, inorganic oxide particles other than the zeolite particles, and a catalytic noble metal, and
a ratio d_{ZEO}/d_{OX} of an average particle size d_{ZEO} of the zeolite particles to an average particle size d_{OX} of the inorganic oxide particles other than the zeolite particles is 3.0 or less.

The present inventors examined why exhaust gas purification catalytic devices of the prior art cannot always sufficiently exhibit the functions of adsorbing, retaining, and releasing NOx and HC, particularly NOx, even when a significant amount of zeolite particles is contained in a catalytic coating layer.

Based on the hypothesis that the amount of NOx adsorbed decreases when exhaust gas flow paths in a catalytic coating layer are not sufficiently formed and the contact efficiency between the zeolite particles and the exhaust gas is poor, configurations of a catalytic coating layer in which exhaust gas flow paths can be sufficiently formed were examined.

As a result, the present inventors succeeded in forming sufficient exhaust gas flow paths in a catalytic coating layer by including zeolite particles and inorganic oxide particles other than zeolite particles in the catalytic coating layer of an exhaust gas purification catalytic device and adjusting the particle sizes of both particles.

Specifically, according to mathematical sphere packing theory, when two types of particles having different particle sizes are packed in a space, as long as the ratio d_{big}/dₛₘₐₗₗ of the particle size d_{big} of the large particle-size particles to the particle size dₛₘₐₗₗ of the small particle-size particles is sufficiently large, small particle-size particles can be accommodated between the lattices of the large particle-size particles regardless of the arrangement in which the large particle-size particles are packed.

However, when the ratio d_{big}/dₛₘₐₗₗ is less than 3.43654, the packing arrangement of the large particle-size particles for accommodating the small particle-size particles between lattices is limited, and contact points between large particle-size particles are reduced, whereby exhaust gas flow paths in the catalytic coating layer are formed. Further, when the ratio d_{big}/dₛₘₐₗₗ is less than 2.41423, the lattices of the large particle-size particles need to be expanded to accommodate the small particle-size particles between the lattices, and consequently the exhaust gas flow paths in the catalytic coating layer are expanded.

From such a viewpoint, the ratio d_{ZEO}/d_{OX} of the average particle size d_{ZEO} of zeolite particles to the average particle size dox of inorganic oxide particles other than zeolite particles in the present invention is 3.4 or less and may be 3.2 or less, 3.0 or less, 2.8 or less, 2.6 or less, 2.4 or less, 2.2 or less, or 2.0 or less.

Since the above consideration is also valid when the magnitude relationship between zeolite particles and inorganic oxide particles other than zeolite particles is reversed, the ratio d_{ZEO}/d_{OX} may be 0.30 or greater, 0.40 or greater, 0.50 or greater, 0.60 or greater, 0.70 or greater, 0.80 or greater, 0.90 or greater, or 1.00 or greater.

Inorganic oxide particles other than zeolite particles, for example, alumina particles, generally have a wide particle size distribution, and a significant amount of fine particles having a particle size smaller than the average particle size are often present. Particularly, the larger the average particle size, the larger the presence ratio of fine particles. When voids between particles in the catalytic coating layer are packed with such fine particles, there may be insufficient exhaust gas flow paths in the catalytic coating layer. To avoid this, as the inorganic oxide particles other than zeolite particles, the use of those having a small average particle size is considered.

From such a viewpoint, the ratio d_{ZEO}/d_{OX} of the average particle size d_{ZEO} of zeolite particles to the average particle size dox of inorganic oxide particles other than zeolite particles may be greater than 1.00, 1.05 or greater, 1.10 or greater, or 1.15 or greater.

As used herein, an average particle size of zeolite particles or inorganic oxide particles other than zeolite particles means a median diameter (D50) measured by a laser diffraction/scattering method. The measurement of a median diameter (D50) by a laser diffraction/scattering method can be carried out using, for example, a laser diffraction/scattering type particle size distribution measuring device, model name "LA960", manufactured by HORIBA, Ltd.

Hereinafter, each element constituting the exhaust gas purification catalytic device of the present invention will be described in order.

### <Zeolite particles>

The zeolite particles of the present invention may have an average pore diameter of 6.0 Å or less. By having an average pore diameter of 6.0 Å or less for the zeolite particles, the amount of NOx adsorbed can be increased even when HC is present. It is considered that when the average pore diameter of the zeolite particles is 6.0 Å or less, HC does not easily penetrate inside the pores, whereby NOx is preferentially adsorbed inside the pores. The average pore diameter of the zeolite particles may be 5.8 Å or less, 5.5 Å or less, 5.3 Å or less, or 5.0 Å or less.

It is preferable that the zeolite particles have such an average pore diameter that NOx can easily penetrate therethrough for the adsorption of NOx in the pores. From this viewpoint, the average pore diameter of the zeolite particles may be, for example, 3.5 Å or more, 3.7 Å or more, 4.0 Å or more, 4.2 Å or more, or 4.5 Å or more.

The average pore diameter of a zeolite is measured by a gas adsorption method in accordance with JIS Z8831-3:2010. As an adsorption gas, for example, argon, hydrogen, or nitrogen can be used.

The zeolite having the average pore diameter as described above may be a zeolite comprising one or more selected from, for example, MFI type, BEA type, MOR type, CHA type, and FER type.

The silica-alumina ratio SAR of a zeolite constituting the zeolite particles of the present invention may be 25 or less. When the SAR of the zeolite is 25 or less, the zeolite contains a large amount of Brønsted acid and becomes acidic. When a catalytic noble metal, for example, Pd, is supported on such an acidic zeolite, the catalytic noble metal tends to be in a highly oxidized state and HC poisoning is suppressed. As a result, even under the gas condition in which HC and NOx coexist, an advantage in which the catalytic noble metal functions as a NOx adsorption site is obtained.

From this viewpoint, the SAR of the zeolite is 25 or less and may be 23 or less, 20 or less, 18 or less, 15 or less, 12 or less, 10 or less, or 8 or less. When the SAR of the zeolite is excessively low, the specific surface area of the zeolite decreases, and the problem of a reduction in adsorption sites for NOx may arise. From the viewpoint of avoiding this, the SAR of the zeolite may be 4 or greater, 5 or greater, 6 or greater, or 7 or greater.

When the particle size d_{ZEO} of the zeolite particles is excessively small, in the catalytic coating layer, the gaps between zeolite particles may become narrow, and contact between the zeolite particles and the exhaust gas may be insufficient. From the viewpoint of avoiding this, the particle size of the zeolite particles may be 2 µm or more, 3 µm or more, 4 µm or more, or 5 µm or more. On the other hand, when the particle size d_{ZEO} of the zeolite particles is excessively large, the catalytic coating layer containing the zeolite particles thickens, and the flow of exhaust gas in the exhaust gas purification catalytic device may be hindered. From the viewpoint of avoiding this, the particle size of the zeolite particles may be 30 µm or less, 25 µm or less, 20 µm or less, 15 µm or less, 12 µm or less, 10 µm or less, or 8 µm or less.

It is preferable that the zeolite particles have few surface defects from the viewpoint of maintaining as many NOx adsorption sites as possible. From this viewpoint, it is preferable that the zeolite particles of the present invention not undergo a milling process after synthesis (after crystal growth).

### <Inorganic oxide particles other than zeolite particles>

The inorganic oxide particles other than zeolite particles of the present invention may be particles comprising one or more selected from alumina, silica, titania, ceria, zirconia, and rare earth metal oxides other than ceria. The rare earth metal oxide other than ceria may be an oxide of a metal such as yttrium, lanthanum, praseodymium, or niobium.

The particle size d_{OX} of the inorganic oxide particles other than zeolite particles is arbitrary as long as the predetermined ratio d_{ZEO}/d_{OX} of the present invention is satisfied, depending on the particle size d_{ZEO} of the zeolite particles. However, from the viewpoints of ensuring gaps between particles and avoiding excessive thickening of the catalytic coating layer, the particle size d_{OX} may be 1 µm or more, 2 µm or more, 3 µm or more, or 4 µm or more. When the particle size d_{ZEO} of the zeolite particles is excessively large, the catalytic coating layer containing the zeolite particles thickens, and the flow of exhaust gas in the exhaust gas purification catalytic device may be hindered. From the viewpoint of avoiding this, the particle size of the zeolite particles may be 50 µm or less, 40 µm or less, 30 µm or less, 20 µm or less, 15 µm or less, 10 µm or less, or 8 µm or less.

### <Mass ratio of zeolite particles to inorganic oxide particles other than zeolite particles>

The ratio M_{ZEO}/M_{OX} of the mass M_{ZEO} of zeolite particles to the mass M_{OX} of inorganic oxide particles other than zeolite particles in the catalytic coating layer may be 0.125 or greater or 1.00 or greater, and may be 8.00 or less or 3.00 or less.

### <Catalytic noble metal>

In the present invention, the catalytic noble metal is intended to function as a catalyst for adsorbing NOx (for example, NO). Therefore, the catalytic noble metal of the present invention may be selected from platinum group elements, particularly one or two selected from Pt, Pd, and Rh or all thereof. Pd is particularly preferable.

In the present invention, the catalytic noble metal may be supported by one type of particles selected from zeolite particles and inorganic oxide particles other than zeolite particles or both thereof, particularly the zeolite particles. In the exhaust gas purification catalytic device of the present invention, by having the catalytic noble metal supported by the zeolite particles, HC poisoning of the catalytic noble metal is suppressed. Even under the gas condition in which HC and NOx coexist, an advantage in which NOx can be selectively adsorbed on the catalytic noble metal is obtained.

The particle size of the catalytic noble metal of the present invention is arbitrary, but may be, for example, 0.1 nm or more and 20 nm or less.

The supported amount of catalytic noble metal of the present invention based on the mass of the zeolite particles may be, for example, 0.1% by mass or greater, 0.2% by mass or greater, 0.3% by mass or greater, 0.4% by mass or greater, or 0.5% by mass or greater, and may be 5.0% by mass or less, 4.0% by mass or less, 3.0% by mass or less, 2.0% by mass or less, or 1.0% by mass or less.

### <Optional component of catalytic coating layer>

The catalytic coating layer of the exhaust gas purification catalytic device of the present invention contains zeolite particles, inorganic oxide particles other than zeolite particles, and a catalytic noble metal, as described above, and may contain an additionally optional component as needed.

Examples of the optional component of the catalytic coating layer include a binder, an alkaline metal compound, or an alkaline earth metal compound.

The binder may be, for example, alumina sol, zirconia sol, silica sol, or titania sol.

The alkaline metal compound and alkaline earth metal compound may each be a sulfate, a nitrate, a hydrochloride, or an oxide of a desired metal.

### <<Method for manufacturing exhaust gas purification catalytic device>>

The exhaust gas purification catalytic device of the present invention may be manufactured by any method as long as the catalytic device has the above configuration.

The exhaust gas purification catalytic device of the present invention may be manufactured, for example, by a method comprising the following processes:
(1) preparing a slurry for forming a catalytic coating layer (Process 1)
(2) applying the slurry for forming a catalytic coating layer to a substrate to form a coating film (Process 2), and
(3) baking the obtained coating film to form a catalytic coating layer on the substrate (Process 3).

Process 1 may comprise, for example, the following steps:
(i) preparing a catalytic noble metal-supporting, zeolite particle-containing slurry (Step 1),
(ii) preparing a slurry containing inorganic oxide particles other than zeolite particles (Step 2), and
(iii) mixing the catalytic noble metal-supporting, zeolite particle-containing slurry and the slurry containing inorganic oxide particles other than zeolite particles to prepare a slurry for forming a catalytic coating layer (Step 3).

In Step 1 of Process 1, a catalytic noble metal-supporting, zeolite particle-containing slurry is prepared. The present step may be carried out by, for example, charging particles consisting of a desired zeolite and a precursor of a desired catalytic noble metal in a solvent such as water, wet-milling using a suitable milling means, and classifying the milled particles as needed.

The precursor of the catalytic noble metal may be, for example, a sulfate, a nitrate, a hydrochloride, or a complex compound of a desired catalytic noble metal. It is preferable that the precursor of the catalytic noble metal be soluble in a solvent to uniformly disperse the catalytic noble metal on the zeolite particles.

In Step 2 of Process 1, a slurry containing inorganic oxide particles other than zeolite particles is prepared. The present step may be carried out by, for example, charging particles of a desired inorganic oxide in a solvent such as water, wet-milling using a suitable milling means, and classifying the milled particles as needed.

Steps 1 and 2 of Process 1 may be carried out in any order.

In Step 3 of Process 1, the catalytic noble metal-supporting, zeolite particle-containing slurry and the slurry containing inorganic oxide particles other than zeolite particles are mixed in a predetermined ratio to prepare a slurry for forming a catalytic coating layer.

In Process 2, the slurry for forming a catalytic coating layer is applied to the substrate to form a coating film. The application of the slurry may be carried out by a known method or a method obtained from a known method appropriately modified by a person skilled in the art.

In Process 3, the obtained coating film is baked to form a catalytic coating layer on the substrate, whereby the exhaust gas purification catalytic device of the present invention is obtained. The coating film may be dried, as needed, after application and before baking.

The drying and baking of the coating film may each be carried out by a known method or a method obtained from a known method appropriately modified by a person skilled in the art.

### <Application of exhaust gas purification catalytic device>

The exhaust gas purification catalytic device of the present invention has functions of adsorbing NOx and HC, particularly NOx, efficiently at low temperatures, retaining both up to high temperatures, and releasing NOx and HC, particularly NOx, at high temperatures.

Thus, the exhaust gas purification catalytic device of the present invention may be used as a cold-start catalyst.

The exhaust gas purification catalytic device of the present invention as a cold-start catalyst may be applied to, for example, an exhaust gas purification catalytic system combined with a known three-way catalyst. This exhaust gas purification catalytic system may be configured such that the exhaust gas purification catalytic device of the present invention is arranged on an upstream side of an exhaust gas path and the known three-way catalyst is arranged on a downstream side.

### EXAMPLES

### <<Example 1>>

### 1. Preparation of Pd/zeolite particle-containing slurry

100 parts by mass of a commercially available MFI type zeolite (SAR of 23, average pore diameter of 5.5 Å) and palladium nitrate equivalent to 0.5% by mass in terms of Pd metal with respect to the zeolite were charged in pure water and milled using a ball mill filled with alumina balls as a milling medium, whereby a Pd/zeolite particle-containing slurry containing zeolite particles having an average particle size (D50 particle size) d_{ZEO} of 5.7 µm was prepared.

### 2. Preparation of alumina particle-containing slurry

Alumina was charged in pure water and milled using a ball mill filled with alumina balls as a milling medium, whereby an alumina particle-containing slurry containing alumina particles having an average particle size (D50 particle size) d_{AlO} of 31.0 µm was prepared.

### 3. Preparation of slurry for forming catalytic coating layer

The above Pd/zeolite particle-containing slurry and alumina particle-containing slurry were mixed such that the mass ratio of Pd/zeolite: alumina was 1:4 to prepare a slurry for forming a catalytic coating layer.

### 4. Production of evaluation sample

The slurry for forming a catalytic coating layer was poured on a straight-type honeycomb substrate test piece made of cordierite having a capacity of 0.035 L, and a blower was used to blow away and remove unneeded slurry, whereby a coating film of the slurry for forming a catalytic coating layer was formed on the wall surface of the test piece.

The obtained coating film was dried at 120 °C for 2 h and then baked at 500 °C for 2 h to form a catalytic coating layer, whereby an evaluation sample was produced. The coating amount of the catalytic coating layer of the evaluation sample was 80 g/L (Pd/zeolite particles at 16 g/L, alumina particles at 64 g/L), and the Pd amount was 0.08 g/L (0.5% by mass of supported amount of Pd in Pd/zeolite particles).

The ratio d_{ZEO}/d_{AlO} of the particle size d_{ZEO} of Pd/zeolite particles and the particle size d_{AlO} of alumina particles contained in the catalytic coating layer of the evaluation sample was 0.18.

### 5. Evaluation of amount of NO adsorbed

The obtained evaluation sample described above was subjected to a 3-stage processing consisting of a preprocessing stage, an adsorption stage, and a desorption stage in this order. In each stage, a model gas was supplied to the evaluation sample under the conditions shown in Table 1, and the change in NO concentration in the exhaust gas over time at the adsorption stage was examined. The desorption stage consists of two steps of maintaining 100 °C for 180 s and then elevating the temperature at 20 °C/min for 1,350 s (reaching a temperature of 550 °C).

### [Table 1]

**Table 1.**

| | | Preprocessing stage | Adsorption stage | Desorption stage | |
|---|---|---|---|---|---|
| Model gas composition | NO | 0 | 200 ppm | 0 | |
| | C₃H₆ | 0 | 600 ppm-C₁ | 0 | |
| | N₂ | Balance | Balance | Balance | |
| Gas flow rate (L/min) | | 8 | 8 | 8 | |
| Temperature | | 500 °C | 100 °C | Maintain at 100 °C | Elevate temperature at 20 °C/min |
| Processing time (s) | | 300 | 50 | 180 | 1350 |

Using a honeycomb substrate without a catalytic coating layer formed thereon as a blank sample, the same 3-stage processing was carried out, and the change in NO concentration in the exhaust gas over time at the adsorption stage was examined.

The difference between NO concentration in the exhaust gas for the blank sample and the NO concentration in the exhaust gas for the evaluation sample was integrated over a required time at the adsorption stage, and the obtained value was converted to an amount of NO in mg (milligram), whereby the amount of NO adsorbed by the catalytic coating layer was calculated.

In Table 1, the C₃H₆ concentration at the adsorption stage is shown as "600 ppm-C₁", which indicates a C₃H₆ concentration of 600 ppm in terms of methane. In this case, the concentration of C₃H₆ molecules is 200 ppm.

In the evaluation sample of Example 1, the amount of NO adsorbed by the catalytic coating layer was 26.1 mg.

### «Examples 2 to 4 and Comparative Example 1»

### 2. Preparation of alumina particle-containing slurry>>

Except that the average particle size d_{AlO} of the zeolite particles contained in each alumina particle-containing slurry was adjusted as indicated in Table 2, the evaluation samples were produced in the same manner as in Example 1, and the amounts of NO adsorbed were evaluated. The evaluation results are shown in Table 2.

FIG. 1 shows a graph of changes in NO concentration in an exhaust gas over time at the adsorption stage for the samples of Example 4 and Comparative Example 1 and a blank sample. The numerical values of the horizontal axis "Elapsed time (s)" in the graph of FIG. 1 indicate cumulative time from the preprocessing stage start time.

### [Table 2]

**Table 2.**

| | Average particle size | | Particle size ratio d_{ZEO}/d_{Al O} | Amount of NO adsorbed (mg) |
|---|---|---|---|---|
| | Pd/Zeolite d_{ZEO} (µm) | Alumina d_{AlO} (µm) | | |
| Example 1 | 5.7 | 31.0 | 0.18 | 26.1 |
| Example 2 | 5.7 | 12.0 | 0.48 | 28.4 |
| Example 3 | 5.7 | 4.8 | 1.19 | 29.7 |
| Example 4 | 5.7 | 2.0 | 2.85 | 26.3 |
| Comparative Example 1 | 5.7 | 1.0 | 5.70 | 17.5 |

From the results in Table 2, it was confirmed that each sample of Examples 1 to 4, wherein the ratio d_{ZEO}/d_{AlO} of the particle size d_{ZEO} of Pd/zeolite particles to the particle size d_{AlO} of alumina particles is 3 or less, adsorbed a remarkably larger amount of NO compared to that of Comparative Example 1, wherein the ratio d_{ZEO}/d_{AlO} is greater than 3. Further, it was found that the samples of Examples 2 to 4, wherein the ratio d_{ZEO}/d_{AlO} is 0.3 or greater, adsorbed a particularly large amount of NO.

It should be noted that the amounts of NO adsorbed shown in Table 2 are values measured using a model gas containing NO and C₃H₆.

## Claims

1. An exhaust gas purification catalytic device, comprising
a substrate and a catalytic coating layer on the substrate, wherein
the catalytic coating layer contains zeolite particles, inorganic oxide particles other than the zeolite particles, and a catalytic noble metal, and
a ratio d_{ZEO}/d_{OX} of an average particle size d_{ZEO} of the zeolite particles to an average particle size d_{OX} of the inorganic oxide particles other than the zeolite particles is 3.4 or less.

2. The exhaust gas purification catalytic device according to claim 1, wherein the ratio d_{ZEO}/d_{OX} is 0.30 or greater.

3. The exhaust gas purification catalytic device according to claim 1 or 2, wherein the catalytic noble metal is supported by the zeolite particles.

4. The exhaust gas purification catalytic device according to any one of claims 1 to 3, wherein the catalytic noble metal is one selected from Pt and Pd or both thereof.

5. The exhaust gas purification catalytic device according to any one of claims 1 to 4, wherein the inorganic oxide particles other than the zeolite particles are particles comprising one or more selected from alumina, silica, titania, ceria, zirconia, and rare earth metal oxides other than ceria.

6. The exhaust gas purification catalytic device according to any one of claims 1 to 5, wherein a zeolite constituting the zeolite particles has an average pore diameter of 6.0 Å or less.

7. The exhaust gas purification catalytic device according to any one of claims 1 to 6, wherein a zeolite constituting the zeolite particles comprises one or more selected from MFI type, BEA type, MOR type, and FER type.

8. The exhaust gas purification catalytic device according to any one of claims 1 to 7, wherein a zeolite constituting the zeolite particles has a silica-alumina ratio SAR of 25 or less.

9. The exhaust gas purification catalytic device according to any one of claims 1 to 8, wherein the particle size d_{ZEO} of the zeolite particles is 4 µm or more and 30 µm or less.

10. The exhaust gas purification catalytic device according to any one of claims 1 to 9, wherein a ratio M_{ZEO}/M_{OX} of a mass M_{ZEO} of the zeolite particles to a mass M_{OX} of the inorganic oxide particles other than the zeolite particles in the catalytic coating layer is 0.125 or more and 8.00 or less.

11. The exhaust gas purification catalytic device according to any one of claims 1 to 10 for use as a cold-start catalyst.
